# DEMANDE DE BREVET EUROPEEN

(11) **EP 0 785 505 A2**
(43) Date de publication de la demande: **23.07.1997**
(21) Numéro de dépôt: 96402705.6
(22) Date de dépôt: 12.12.1996
(51) Int. Cl.: G06F 9/44, H04L 29/06

(54) **Methode pour sécuriser les collaborations entre objets d'un programme orienté objet**

(30) Priorité: 27.12.1995 FR 9515542
(71) Demandeur: ALCATEL ALSTHOM COMPAGNIE GENERALE D'ELECTRICITE, 75382 Paris Cédex 08 (FR)
(72) Inventeur: Lermuzeaux, Jean-Marc, 91240 St-Michel Sur Orge (FR); Butler, Neil, 75014 Paris (FR)
(74) Mandataire: Sciaux, Edmond

(57) **Abrégé**

Cette méthode consiste à assigner un niveau d'habilitation (HAB) à un objet client et un niveau de sensibilité dit dynamique (NSD) à une méthode (ou procédure de traitement) d'un objet serveur (Proc0bjsv). Le niveau de sensibilité dynamique est calculé au moment de l'instanciation (50,51) de l'objet serveur à partir de niveaux de sensibilité dits statiques (NSS). Le niveau d'habilitation de l'objet client est passé à la méthode de l'objet serveur lors de l'invocation de cette méthode par l'objet client et ce niveau d'habilitation (HAB) est comparé (55) au niveau de sensibilité dynamique (NSD) de la méthode aux fins d'un contrôle d'accès. Cette méthode permet de mettre en oeuvre un modèle de sécurité multi-niveaux.

## Description

L'invention concerne la sécurisation de programmes orientés objets.

Plus particulièrement, l'invention porte sur une méthode pour sécuriser une collaboration entre une procédure de traitement de données d'un objet client et une autre procédure de traitement de données d'un objet serveur.

Une collaboration entre une procédure de traitement de données d'un objet client et une procédure de traitement de données d'un objet serveur résulte d'une demande de service de la part de l'objet client à l'objet serveur. Cette demande de service est implémentée classiquement par un appel ou invocation de la procédure de traitement de données de l'objet serveur dans le code source de la procédure de traitement de données de l'objet client.

Pendant l'exécution d'un programme orienté objet non sécurisé, des objets sont créés suite à des requêtes d'instanciation et l'accès aux données d'un objet (objet serveur) par un autre objet (objet client) est rendue possible par le biais d'une collaboration entre deux procédures de traitement respectivement de l'objet client et de l'objet serveur. Il s'ensuit que ce type de collaboration non contrôlée peut s'avérer dangereuse pour la confidentialité et l'intégrité des données sensibles du programme.

Le but de l'invention est de proposer une solution à ce problème de contrôle d'accès.

Ce but est atteint par une méthode pour sécuriser, dans un programme orienté objet, une collaboration entre une procédure de traitement de données d'un objet client et une autre procédure de traitement de données d'un objet serveur de ce programme, comprenant les étapes consistant à:
- assigner un niveau d'habilitation à l'objet client,
- assigner un niveau de sensibilité dit dynamique à la procédure de traitement de données de l'objet serveur lors de l'instanciation de cet objet serveur par un constructeur d'objet, ce niveau de sensibilité dynamique étant calculé à partir de niveaux de sensibilité statiques et d'un niveau d'habilitation passé au constructeur d'objet, les niveaux de sensibilité statiques étant maintenus en mémoire et assignés respectivement à différentes entités logiques du programme,
- faire passer le niveau d'habilitation assigné à l'objet client vers la procédure de traitement de données de l'objet serveur, via le message d'invocation de la procédure de traitement de cet objet serveur par la procédure de traitement de l'objet client et,
- contrôler, dans la procédure de traitement de l'objet serveur si le niveau d'habilitation qui lui a été passé est suffisant par rapport au niveau de sensibilité dynamique qui lui a été assigné.

Ainsi, l'accès aux données de l'objet serveur par l'objet client peut être contrôlé, voire interdit. Les mécanismes pour effectuer un tel contrôle peuvent être implémentés dans le code source du programme à sécuriser de façon relativement indépendante de la partie du code concernant l'application du programme. Il est donc possible de les implémenter par un traitement automatique du ou des fichiers contenant le code source du programme à sécuriser.

Une telle méthode s'inscrit dans un modèle de sécurité multi-niveaux orienté objet avec un niveau de granularité des informations sécurisées qui atteint non seulement les classes d'objets et les objets mais aussi les procédures de traitement de données de ces objets (ces procédures correspondant aux méthodes de classe au sens large de la programmation orientée objet), et les attributs de classe.

Les caractéristiques et avantages de l'invention apparaîtront encore mieux à la lecture de la description qui suit, d'un exemple de mise en oeuvre et des dessins annexés.

La figure 1 illustre très schématiquement, les différentes phases préalables à l'implémentation des mécanismes de sécurité dans le code source d'un programme orienté objet à sécuriser.

La figure 2 illustre le processus d'assignation d'un niveau de sécurité dynamique à une procédure de traitement de données d'un objet instancié.

La figure 3 illustre le processus de contrôle d'un niveau d'habilitation par rapport à un niveau de sensibilité dynamique à l'exécution d'une procédure de traitement de données d'un objet serveur.

La "sécurité" offerte par le programme sécurisé est définie par un modèle formel de sécurité qui s'inspire de la politique de sécurité dite multi-niveaux de Bell & Lapadula décrite dans l'article "Secure computer: unified exposition and Multics interpretation, Tecnical Report ESD-TR-75-306, The Mitre Corporation, Bedford MA, March 1976".

Le modèle de sécurité multi-niveaux proposé est défini par les propriétés suivantes:
(1) Si une procédure de traitement de données ou méthode f1 d'un objet 01 désire invoquer une méthode f2 d'un objet O2, le niveau d'habilitation détenu par f1 doit dominer le niveau de sensibilité calculé pour f2;
(2) Si une méthode f1 d'un objet 01 désire détruire un objet O2, le niveau d'habilitation détenu par f1 doit dominer le niveau de sensibilité détenu par 02;
(3) Une méthode f2 d'un objet serveur 02 reçoit le niveau d'habilitation de la méthode f1 de l'objet client O1 qui l'invoque;
(4) Si une méthode f instancie un objet O d'une classe C qui a un attribut A et une méthode M, alors
   4.1 - le niveau de sensibilité de l'objet O est égal à la valeur maximale entre le niveau de sensibilité affecté à la classe C et le niveau d'habilitation détenu par f,
   4.2 - le niveau de sensibilité de l'attribut A de l'objet O est égal à la valeur maximale entre le niveau de sensibilité affecté à l'attribut A de la classe C et le niveau d'habilitation détenu par f,
   4.3 - le niveau de sensibilité de la méthode M de l'objet O est égal à la valeur maximale entre le niveau de sensibilité affecté à la méthode M de la classe C et le niveau d'habilitation détenu par f;
(5) Le niveau de sensibilité d'une classe instanciée domine celui affecté à sa classe paramétrable;
(6) Le niveau de sensibilité d'une sous-classe domine celui affecté à la super classe;
(7) Le niveau de sensibilité d'une classe contenue domine celui affecté à la classe contenante;
(8) Le niveau de sensibilité d'un attribut d'une classe domine celui affecté à cette classe;
(9) Si un attribut A d'une classe C1 a comme valeur une classe C2, le niveau de sensibilité de C2 est dominé par le niveau de sensibilité affecté à A.

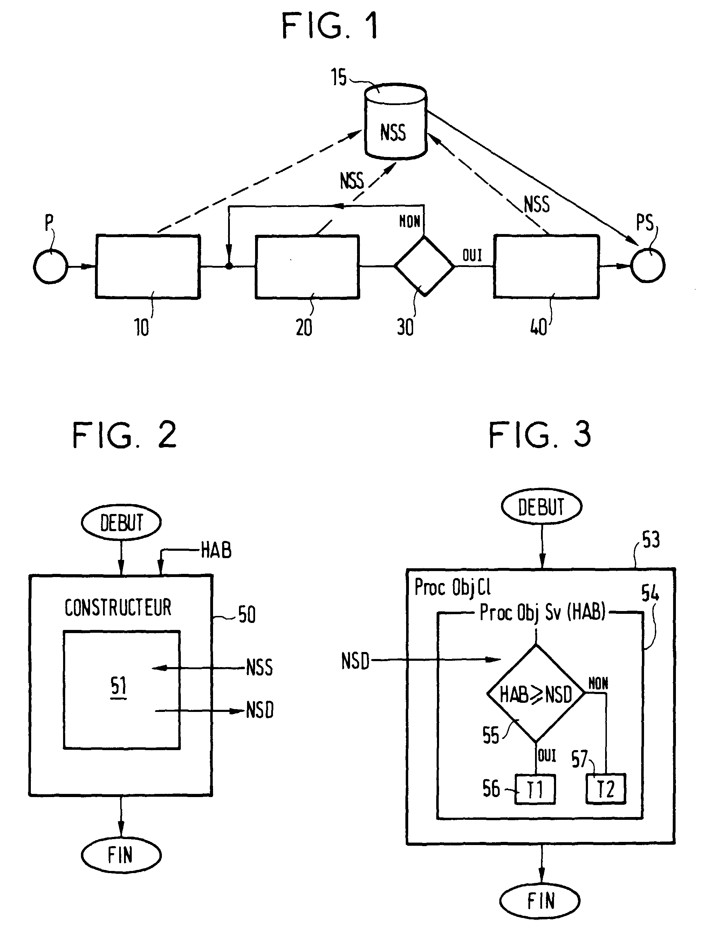

Figure 1, le code source du programme orienté objet à sécuriser indiqué par P comporte généralement une ou plusieurs hiérarchies de classes. Chaque déclaration de classe inclut une déclaration d'attributs et de méthodes comme cela est bien connu en programmation orientée objet.

Dans le modèle de sécurité tel que défini ci-dessus par les neuf propriétés, les propriétés (5) à (9), dites propriétés statiques, s'appliquent uniquement aux classes, attributs de classe et méthodes de classe. Au contraire, les propriétés (1) à (4), dites propriétés dynamiques, s'appliquent aux objets (instanciations de classes) et à leurs méthodes.

Le code du programme source P, est traité dans une phase d'analyse 10 (réalisée éventuellement de façon automatique par un analyseur syntaxique) pour l'identification des différentes entités logiques du programme, à savoir les classes, les attributs de classe et les méthodes de classe. A l'issu de la phase 10, la structure d'une base de données 15 est créée. Cette base de données est destinée à contenir des niveaux de sensibilité dits statiques assignés à ces différentes entités logiques qui ont été déclarées dans le code source du programme. Plus particulièrement, dans cette base de données 15, les identificateurs (noms de classes, d'attributs etc...) des entités logiques sont répertoriés dans des enregistrements qui recevront par la suite les niveaux de sensibilité statiques.

Ensuite, dans la phase 20, des niveaux de sensibilité statiques NSS sont assignés aux classes et attributs de classe déclarés dans le programme. En d'autres termes, ces niveaux de sensibilité statiques sont consignés dans la base de données 15 en correspondance avec les identificateurs des entités logiques correspondant. Suite à cette phase 20, il y a lieu de contrôler, dans la phase 30, que les niveaux de sensibilité assignés aux entités logiques vérifient bien les propriétés statiques du modèle de sécurité tel que défini ci-dessus. Cette phase est normalement menée par un administrateur de données habilité pour sécuriser le programme. Dans la négative, la phase 20 est reprise.

Dans l'affirmative, les niveaux de sensibilité statiques NSS des méthodes de classe sont ensuite calculées en 40 et consignés dans la base de données 15. Le calcul des niveaux de sensibilité des méthodes requiert de connaître les niveaux de sensibilité des attributs utilisés par les méthodes en lecture seule et les niveaux de sensibilité de ceux utilisés en lecture/écriture. Les niveaux de sensibilité statique des méthodes peuvent aussi être calculées à l'exécution du programme.

A l'issue de la phase 40, la base de données 15 est complètement chargée avec des niveaux de sensibilité statiques. Les mécanismes de sécurité propres à la mise en vigueur des propriétés dynamiques du modèle de sécurité doivent alors être implémentés dans le code source du programme orienté objet à sécuriser. Le code source du programme incluant ces mécanismes de sécurité est ensuite compilé pour obtenir un programme exécutable sécurisé indiqué par PS. Au moment de son exécution, les niveaux de sensibilité statiques sont utilisés par les mécanismes de sécurité pour calculer des niveaux de sensibilité dynamique comme décrit ci-dessous. Les niveaux de sensibilité statiques peuvent être lus dans la base de données 15 au cours de l'exécution du programme mais ceci peut être pénalisant du point de vue du temps d'exécution. Il est préférable de charger, au démarrage du programme sécurisé, tous les niveaux de sensibilités statiques dans une structure de données interne à celui-ci.

A noter que ces mécanismes de sécurité peuvent être implémentés au moment du développement du code source du programme et dans ce cas, la base de données 15 est constituée à la fin du développement du code source du programme. Ces mécanismes de sécurité peuvent aussi être implémentés dans un code source déjà existant du programme et l'implémentation consiste alors dans une modification de ce code source, cette modification pouvant alors être réalisée par un traitement automatique.

Par la suite, on décrit un exemple d'implémentation des mécanismes de sécurité dans le code source d'un programme orienté objet développé à partir du langage C++, par modification du code source existant.

La modification porte d'abord sur le corps des méthodes (constructeur et destructeur d'objet compris) de classe incluses dans le code source du programme. Pour chaque méthode, un paramètre représentatif d'un niveau d'habilitation est ajouté à la liste des paramètres de la méthode. Le niveau d'habilitation est utilisé, à l'exécution, comme un jeton qui passe d'un objet client à un objet serveur, l'objet serveur recevant le niveau d'habilitation comme paramètre d'une de ses méthodes, constructeur compris, et le fait passer en tant qu'objet client à un autre objet serveur lorsqu'il invoque une méthode de cet autre objet serveur. Par ailleurs, dans le corps de chaque méthode, un contrôle est ajouté pour comparer le niveau d'habilitation à un niveau de sensibilité assigné dynamiquement au moment de l'exécution du programme.

Les autres mécanismes de sécurité sont centralisés dans une super classe héritée directement ou indirectement par toutes les classes déclarées dans le code source du programme. C'est dans cette super classe qu'est défini un constructeur d'objet qui assigne dynamiquement un niveau de sensibilité à chaque méthode d'un objet lors de son instanciation. Ce niveau de sensibilité dynamique est calculé à partir, d'une part d'un niveau d'habilitation passé en paramètre au constructeur par l'objet client du constructeur et, d'autre part, des niveaux de sensibilité statiques assignés à la classe d'appartenance de l'objet et aux méthodes de cette classes. Les niveaux de sensibilité dynamique assignés à l'objet et à chacune de ses méthodes sont calculés en suivant la définition de la propriété (4) du modèle de sécurité. C'est aussi dans cette super classe qu'est définie et gérée une structure additionnelle d'archivage des niveaux de sensibilité dynamiques. C'est encore dans cette super classe qu'est définie une fonction apte à récupérer, dans la structure additionnelle d'archivage, le niveau de sensibilité dynamique de chaque méthode d'objet lors de son invocation.

L'annexe 1.A présente succinctement le code source d'un programme orienté objet en langage C++ à sécuriser. Il comporte une classe CX et une méthode MX de type "Type" avec des paramètres a de type "T1", b de type "T2", c de type "T3", etc.

L'annexe 1.B présente succinctement le code source du programme orienté objet de l'annexe 1.A après modification. Annexe 1.B, ligne 3, la classe CX est devenue une sous classe de la classe ObjetSecurite_ par héritage direct (dans le cas d'exemple) ou indirect. Ligne 6, un pointeur sur un objet spécial de cette classe est ajouté à la classe CX pour maintenir, dans cet objet spécial, les niveaux de sensibilité statiques de la classe, de ses attributs et de ses méthodes. Lignes 8 et 24, le paramètre d'habilitation Hab du type NiveauSecurite_ est ajouté à toutes les interfaces de méthodes y compris les destructeurs et constructeurs d'objets. Ligne 26, une clause conditionnelle est ajoutée au début du corps de chaque méthode. Lignes 27 à 33, le corps de chaque méthode comporte une partie exécutable dans le cas où le niveau d'habilitation Hab est suffisant par rapport au niveau de sensibilité de méthode (dynamique) Sens et une autre partie exécutable dans le cas contraire. Ligne 15, il y a un seul constructeur avec l'interface incluant le niveau d'habilitation. Ce constructeur est utilisé par le mécanisme de sécurisation pour créer les objets "ObjetDeClasse" et ne doit pas être pas appelé par des méthodes de classe. Lignes 10 et 11, l'utilisation du constructeur par défaut est rendue inopérante. Tous les appels aux constructeurs doivent inclure un niveau d'habilitation Hab (de même que pour toute méthode). Ligne 12, l'utilisation du destructeur par défaut est rendue inopérante. Le destructeur par défaut "delete" est remplacé par le la méthode "Detruire_". Lignes 19 et 20, En plus de l'ajout du niveau d'habilitation Hab dans l'interface d'un constructeur, il est aussi nécessaire d'ajouter un pointeur à sa super-classe (dans le cas présent, ObjetSecurite_). A noter que dans cette implémentation, la clause de contrôle d'accès est relativement indépendante du code des méthodes de l'application du programme de sorte que les modifications indiquées ci-dessus peuvent être facilement faites de façon automatique par un système d'analyse lexicale.

L'annexe 2 illustre le contenu d'un fichier contenant le code source de la classe Objetsecurite_. Ligne 3, la classe ObjetSecurite doit être héritée directement ou indirectement par toutes les classes à sécuriser. Ligne 6, *ObjetSecurite_ est l'objet de classe pour la classe ObjetSecurite_ elle-même. Lignes 19 et 20, la méthode Max_ retourne le plus petit niveau de sécurité (SL) qui est plus grand que les deux valeurs passées en paramètre. Dans cette exemple, les niveaux de sécurité sont implémentés sous la forme d'une énumération de type SL, c'est-à-dire par un ordre strict. Ainsi, la valeur Max_ est simplement le maximum numérique de deux paramètres. Cependant, un ordre partiel pourrait aussi être envisagé et dans ce cas, la valeur retournée pourrait être différente des paramètres. Ligne 28, afin de contrôler la création des objets, les interfaces des constructeurs sont modifiées. De la même façon qu'une classe sécurisée arbitraire C est une sous classe de la classe ObjetSecurite_, l'exécution d'un constructeur de C renvoie à l'exécution du constructeur pour ObjetSecurite_ qui à son tour appelle la méthode Instancier_. C'est cette méthode qui calcule dynamiquement et stocke en mémoire le niveau de sensibilité d'un objet, de ses méthodes et attributs. Seconde page de l'annexe 2, ligne 12, La méthode Detruire est utilisée pour contrôler la destruction d'un objet. Lignes 16 et 20, même page, la méthode Sens_ retourne le niveau de sensibilité d'un objet ou d'une méthode.

Annexe 3, ligne 3, les niveaux de sécurité sont ici choisis dans un ensemble à ordre strict. Ligne 4, Le type SL est encapsulé dans la classe NiveauSecurite_. Les lignes 10 et 11 montrent les définitions des opérateurs = et >= dans l'ensemble SL.

L'annexe 4 illustre le contenu d'un autre fichier source contenant une fonction Securiser_() qui, pour un identificateur de classe passé en paramètre, récupère son niveau de sensibilité statique et crée un objet de type Sensibilites_ contenant le niveau de sensibilité de la classe et les niveaux de sensibilité des méthodes de classe. Cette fonction retourne un objet de la classe Sensibilites_ définie dans le fichier illustré à l'annexe 7 et qui sert de paramètre d'entrée au constructeur d'objets.

L'annexe 5 illustre le contenu d'un fichier source contenant une fonction CreerObjetDeClasse_() qui sert à créer des objets de classe dans lesquels sont stockés les niveaux de sensibilité statiques récupérés de la base de données 15.

L'annexe 6 illustre le contenu d'un fichier source contenant une classe SecuriteMethode_ qui permet de sauvegarder le niveau de sensibilité d'une méthode d'objet. Cette classe définit en fait un objet, élément d'une liste qui contient les niveaux de sensibilités dynamiques de toutes les méthodes d'un objet.

L'annexe 7 illustre le contenu d'un fichier source contenant la classe Sensibilites_ qui définit un objet contenant tous les niveaux de sensibilité d'un objet du programme, c'est-à-dire le niveau de sensibilité de l'objet lui-même et le premier objet de la liste des objets du type SecuriteMethode_.

La figure 2 illustre très schématiquement le processus d'assignation d'un niveau de sensibilité dynamique NSD à une procédure de traitement d'un objet quelconque et la figure 3 illustre très schématiquement le processus de contrôle lors d'une collaboration entre deux procédures de traitement de données respectivement d'un objet client et d'un objet serveur suivant l'implémentation donnée aux annexes 1.B à 7.

Figure 2, le constructeur d'objets de classe désigné par 50 est activé. Il reçoit un niveau d'habilitation HAB d'un objet client, ce niveau d'habilitation étant assigné à cet objet client suite à une requête d'accès à travers un processus d'authentification par exemple. Le constructeur 50 active la méthode Instancier_ désignée par 51 qui calcule dynamiquement, pour chaque procédure de traitement de l'objet instancié, un niveau de sensibilité dynamique NSD à partir du niveau d'habilitation HAB et de niveaux de sensibilité statiques NSS assignés préalablement aux procédures de traitement de données de la classe de cet objet. Le ou les niveaux de sensibilité dynamiques NSD calculés pour la ou les procédures de traitement de données de cet objet sont consignés en mémoire, dans le cas présent dans les objets de la classe Sensibilites_.

Figure 3, une procédure de traitement de données 53 d'un objet client désignée par ProcObjCl invoque une autre procédure de traitement de données 54 d'un objet serveur. Cette dernière est désignée par ProcObjSv. Le niveau d'habilitation HAB de l'objet client est passé, à travers les paramètres du message d'invocation, vers la procédure ProcObjSv 54. Dans la procédure ProcObjSv, le niveau de sensibilité dynamique NSD calculé pour cette procédure est récupéré (par l'intermédiaire de la méthode Sens_) et est comparé en 55 avec le niveau d'habilitation HAB. Si le niveau d'habilitation est suffisant par rapport au niveau de sensibilité, un premier traitement T1 référencé 56 est exécuté et ceci correspond donc à un accès autorisé. En d'autres termes, le traitement T1 correspond au traitement normal réalisé par la procédure de traitement Procobjsv. Dans le cas contraire, un autre traitement T2 référencé 57 est exécuté et ceci correspond donc à un accès non autorisé.

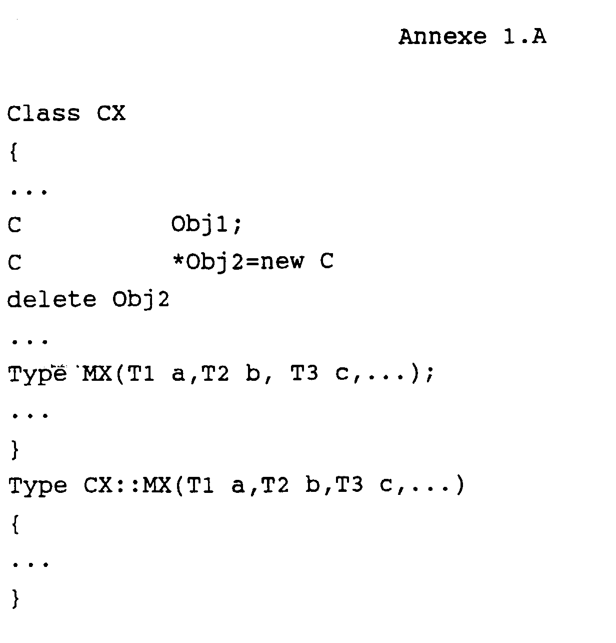

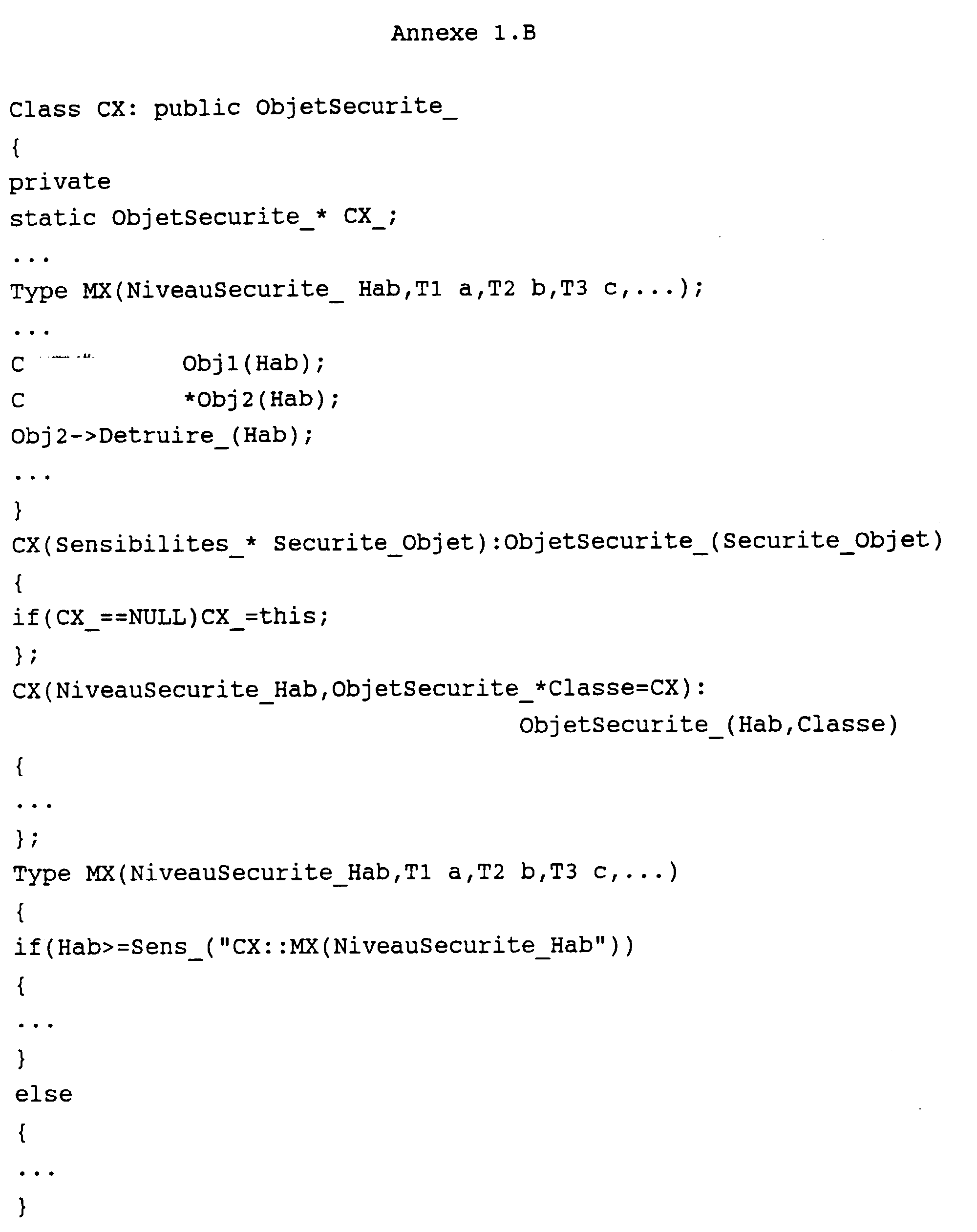

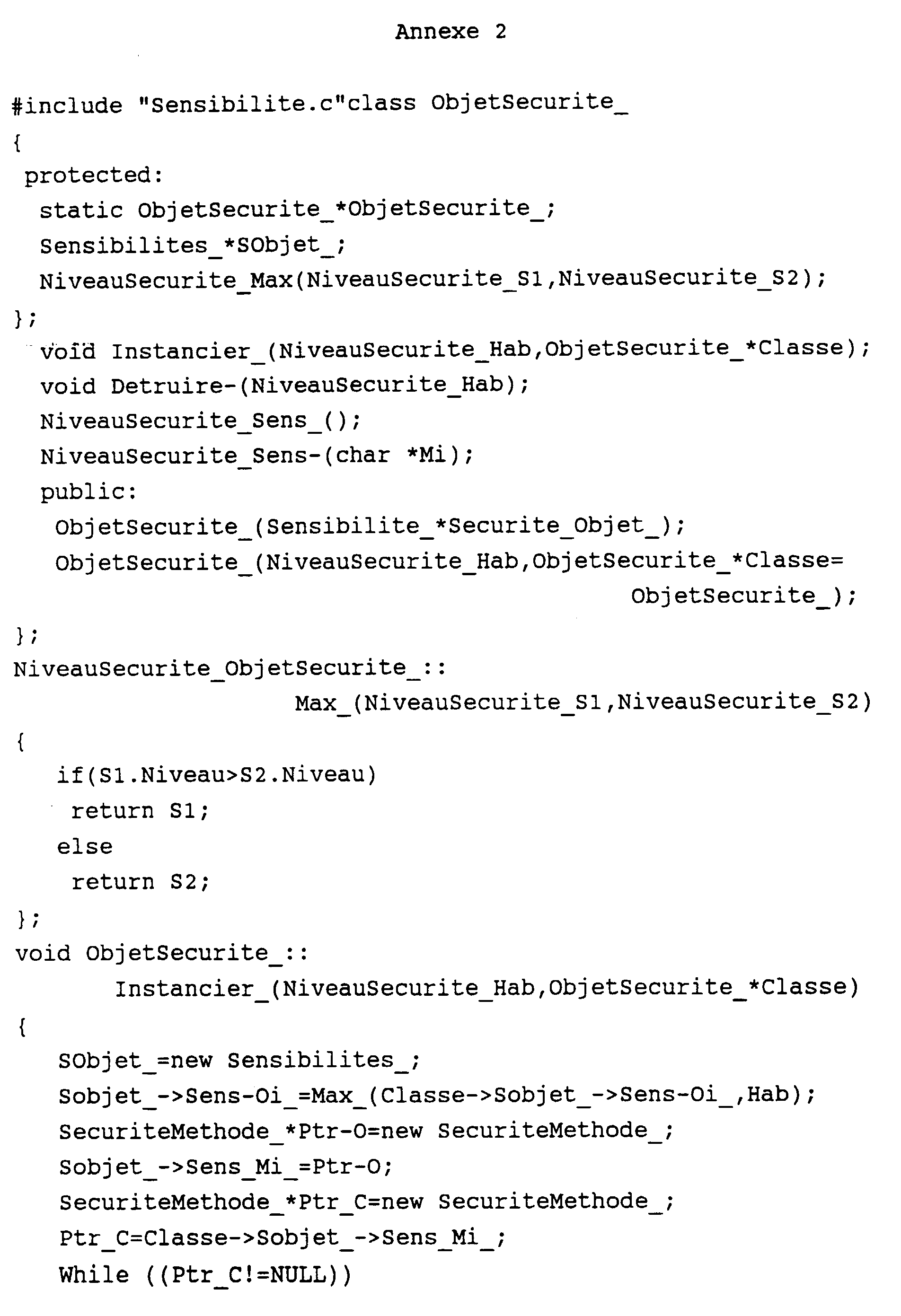

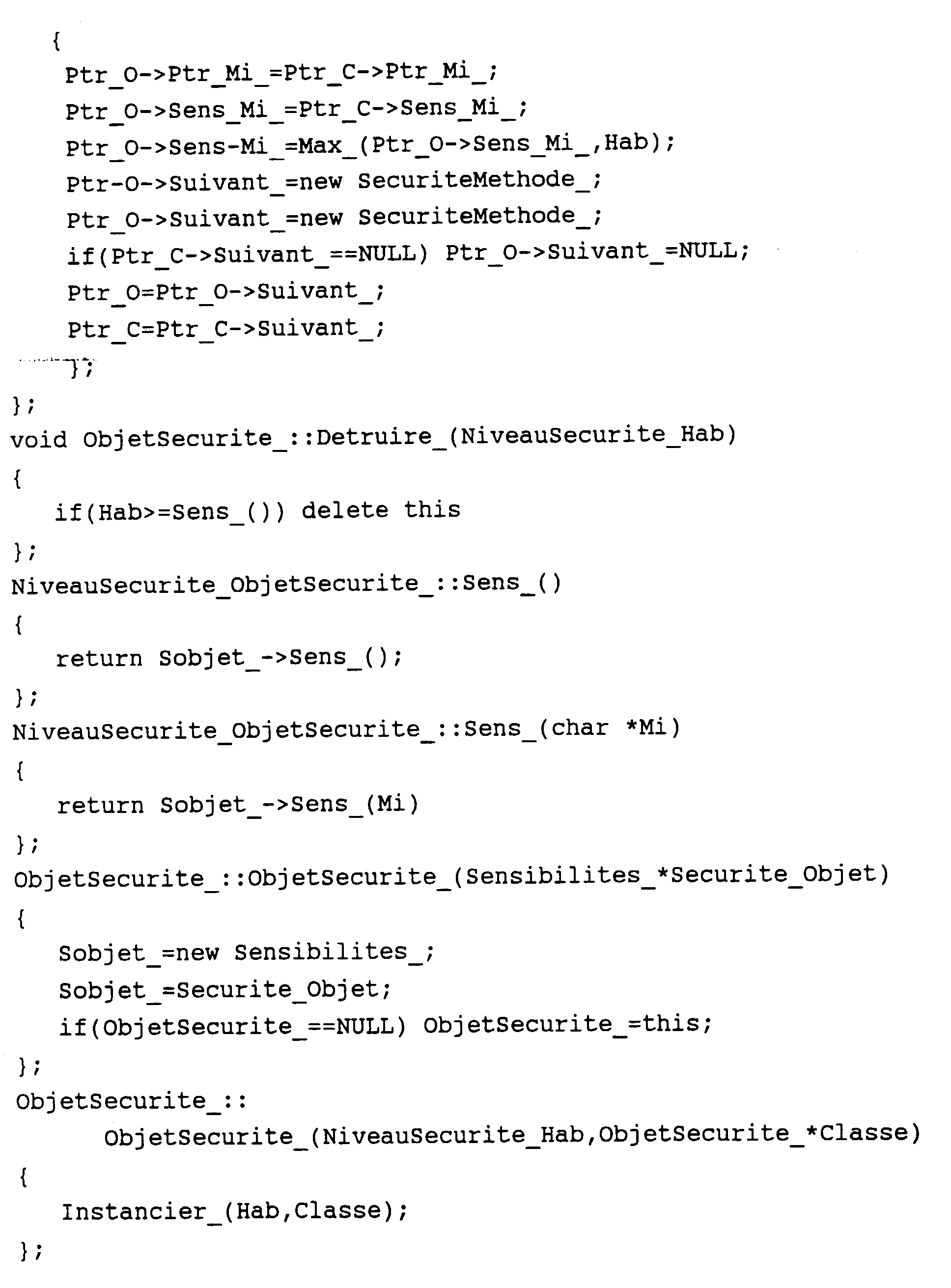

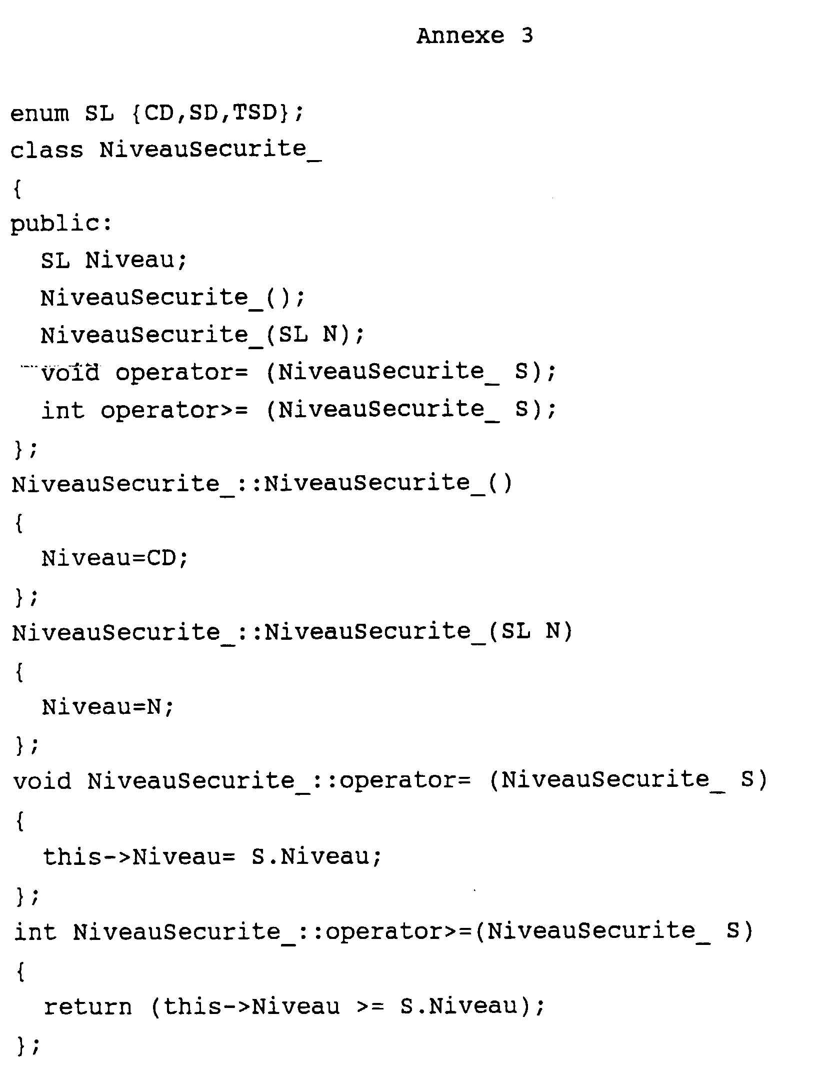

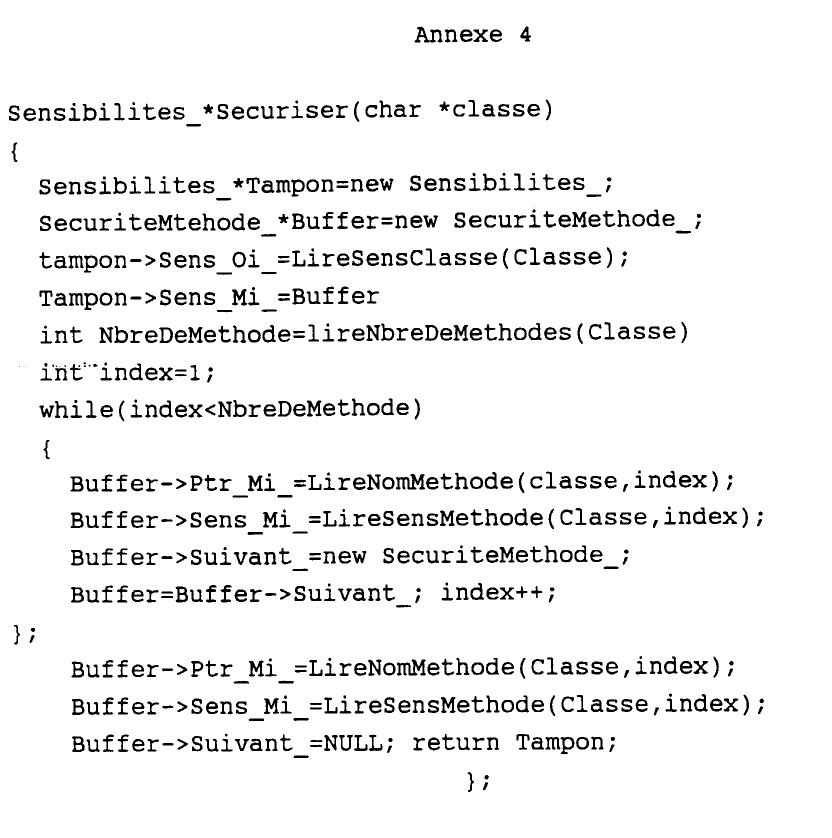

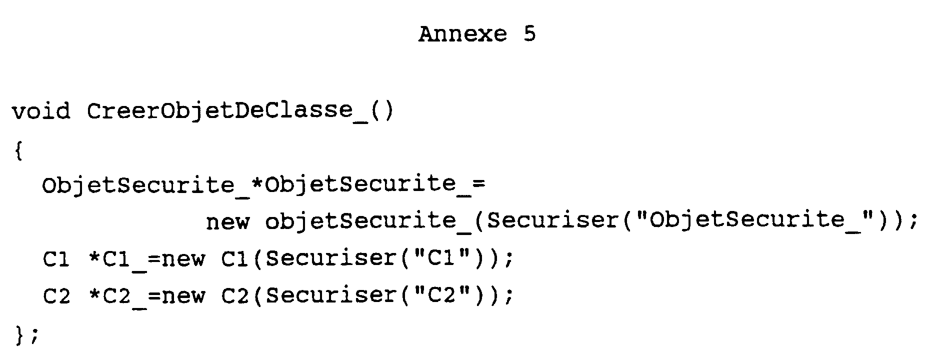

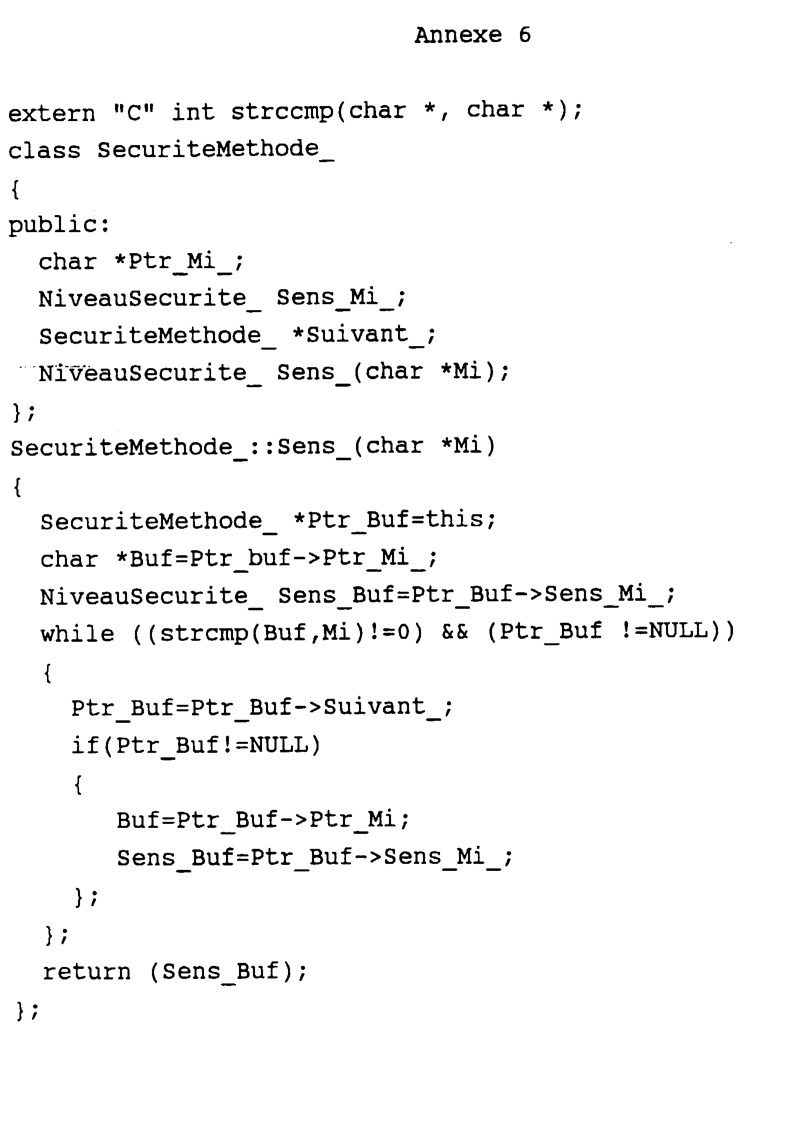

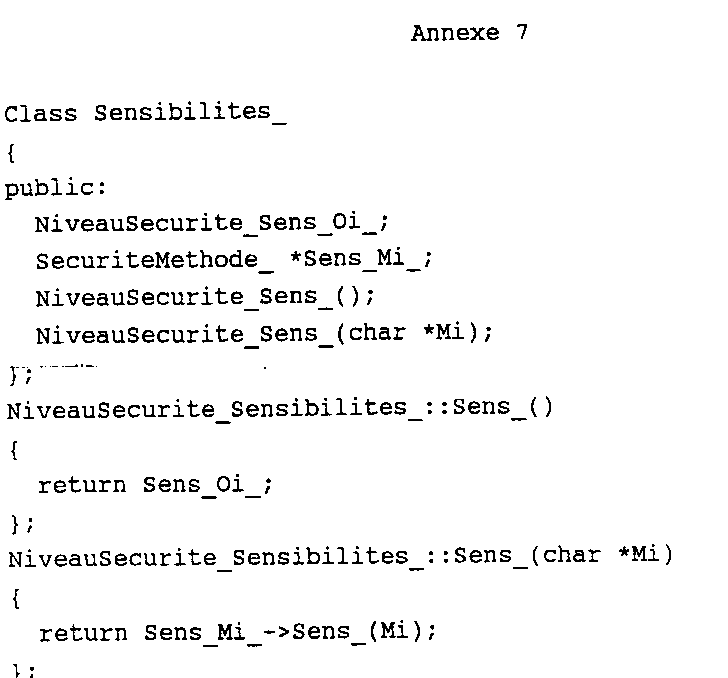

## Revendications

1. Une méthode pour sécuriser, dans un programme orienté objet (P), une collaboration entre une procédure de traitement de données d'un objet client (ProcObjCl) et une autre procédure de traitement de données d'un objet serveur (ProcObjSv) de ce programme, comprenant les étapes consistant à:
- assigner un niveau d'habilitation (HAB) à l'objet client,
- assigner (50,51) un niveau de sensibilité dit dynamique (NSD) à la procédure de traitement de données de l'objet serveur lors de l'instanciation de cet objet serveur par un constructeur d'objet, ce niveau de sensibilité dynamique étant calculé à partir des niveaux de sensibilité statiques (NSS) et d'un niveau d'habilitation passé au constructeur d'objet, les niveaux de sensibilités statiques étant maintenus en mémoire et étant assignés respectivement à différentes entités logiques du programme,
- faire passer le niveau d'habilitation (HAB) assigné à l'objet client vers la procédure de traitement de données de l'objet serveur, via le message d'invocation de la procédure de traitement de cet objet serveur par la procédure de traitement de l'objet client et,
- contrôler (55), dans la procédure de traitement de l'objet serveur, si le niveau d'habilitation qui lui a été passé est suffisant par rapport au niveau de sensibilité dynamique qui lui a été assigné.
